Europäisches Patentamt

European Patent Office

Office européen des brevets

(11) Publication number: **0 212 847**
**A1**

## (12) EUROPEAN PATENT APPLICATION

(21) Application number: 86305513.3

(51) Int. Cl.⁴: **F16B 5/06**

(22) Date of filing: 17.07.86

(30) Priority: 19.08.85 GB 8520691

(43) Date of publication of application:
04.03.87 Bulletin 87/10

(84) Designated Contracting States:
AT BE CH DE FR GB IT LI LU NL SE

(71) Applicant: **DZUS FASTENER EUROPE LIMITED**
**Farnham Trading Estate**
**Farnham Surrey, GU9 9PL(GB)**

(72) Inventor: **Wright, Andrew Charles Walden**
**4A Green Lane**
**Farnham Surrey(GB)**

(74) Representative: **Brunner, Michael John et al**
**GILL JENNINGS & EVERY 53-64 Chancery**
**Lane**
**London WC2A 1HN(GB)**

(54) Fastener.

(57) A fastener for securing panels or other members (1,2) has a housing (3) with pivotable legs (8). Ends - (8A) of the legs project from one end of the housing and are resiliently spread apart by a spring (12) so that shoulders (9) on the leg ends are held in engagement with the edge of an aperture (17) in the member (2). The members are released by squeezing together L-shaped leg extensions (14) projecting from the other end of the housing. The legs are longitudinally retractable relatively to the housing by a spring (15).

Fig.2.

EP 0 212 847 A1

# FASTENER

The invention relates to a fastener for securing a first member, such as a panel, to a second member, such as a panel or frame, at an aperture through the second member.

According to the invention, such a fastener comprises a housing which is arranged to be carried by the first member, and at least two legs which are mounted in the housing and arranged so that ends of the legs may be spread apart, the leg ends projecting at one end of the housing and being arranged to be inserted through the aperture in the second member and having shoulders which engage the remote surface of the second member upon spreading apart of the leg ends to secure the two members together; and means coupled to the legs for causing the leg ends to be displaced towards one another for release from the second member.

The legs are preferably resiliently urged apart to spread the leg ends, as a result of natural resilience of the leg material or by a separate spring, the resilience being overcome when the leg ends are displaced towards one another for insertion through the aperture in the second member. The leg ends may then have leading chamfered portions which ride over the edge of the aperture in the second member upon insertion of the leg ends through the aperture, the leg ends then snapping outwardly as the shoulders pass through the aperture. Most conveniently the legs are each pivotable as a whole adjacent to the other end of the housing and each leg may be provided with an extension projecting from the other end of the housing and arranged to receive a reaction for pivoting the legs to the release position. Thus the arrangement may be such that the legs are loosely mounted in the housing and are pivotable about an axis defined by mutually engaging parts of the legs. The leg extensions may then be arranged to be squeezed together, by hand or by a tool, for the release operation, particularly if the extensions are L-shaped and extend back along the sides of the housing, past the pivotal axis of each arm, towards the one end of the housing.

Preferably the legs are longitudinally slidably mounted in the housing and resiliently urged by a spring to a retracted position in which the shouldered ends of the legs are withdrawn relatively to the housing. This has a number of advantages. First, it ensures firm engagement between the shoulders and the remote surface of the second member, irrespective of the actual thickness of the second member. Secondly, it enables the legs to be maintained in the withdrawn position, after the leg ends have been displaced towards one another and withdrawn from the aperture in the second member so that a number of the fasteners securing a common first member to a second member may be sequentially released prior to separating the two members. Also, when fastening the two members together, the members may be located in their relative positions in which they are to be secured together, and then the legs advanced, by pushing on the extensions or otherwise, to extend the leg ends through the aperture in the second member.

The housing may also have a projecting nose which is arranged to project through the aperture in the second member, and is slotted so that the leg ends are transversely extendible and retractable with respect to the nose. The nose serves the purposes of (a) providing a registration between the two members in their relative positions in which they are to be secured together; (b) providing a part which is comparatively rigidly secured to the first member for engagement with the edges of the aperture in the second member to accommodate shear stresses and avoid possible distortion of the legs; and (c) providing a cover for the shoulders so that there will be no "hand up" on the remote surface of the second member upon withdrawal.

An example of a fastener constructed in accordance with the present invention is illustrated in the accompanying diagrammatic drawings, in which:-

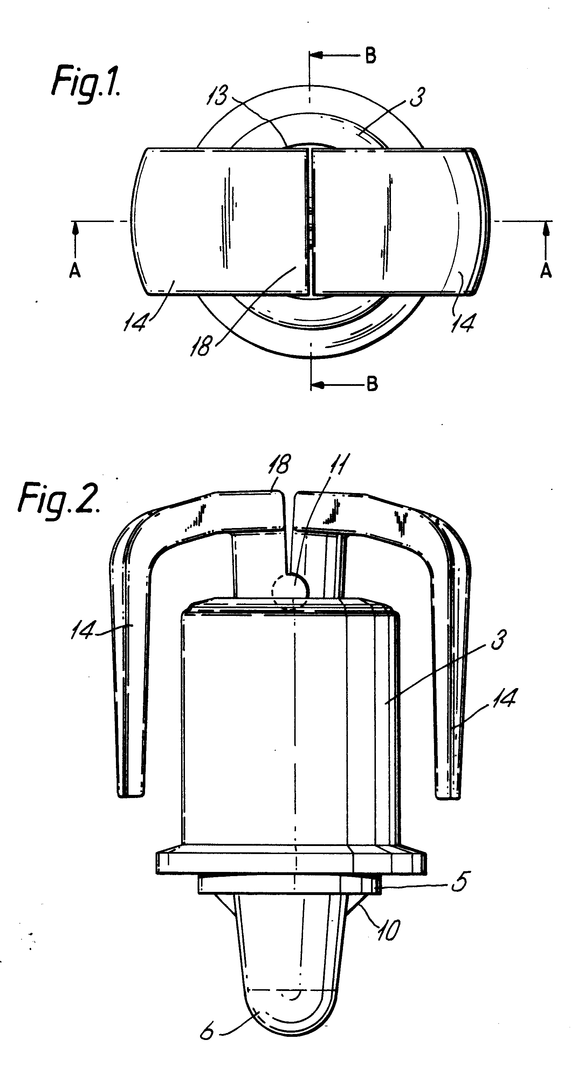

Figure 1 is an end view;

Figure 2 is a side elevation;

Figure 3 is a section on the line A-A in Figure 1 showing the fastener in use securing two panels together;

Figure 4 is a section on the line B-B in Figure 1 showing the fastener in use securing two panels together;

Figure 5 is a section corresponding to Figure 2, but showing the fastener in its release, rather than securing, configuration.

First and second panels 1 and 2 are to be secured together by the fastener. The fastener has a substantially cylindrical housing in the form of a canister 3 which is secured at one end to an aperture in the first panel by a swaged flange 5. The housing has a projecting, slightly convergent, nose 6 formed with a longitudinal slot 7 opening at diammetrically opposed positions in the side of the nose. Two legs 8 are loosely mounted in the housing and have respective ends 8A, each with a shoulder 9 and chamfer 10, projecting from the slot 7. The legs are effectively pivoted relatively to one another and to the housing by abutment of a nib 11 on one leg 8 in a recess in the other leg, on each side of the fastener. A hairpin spring is positioned between the legs and has arms 12 which resiliently urge the legs apart. Each leg extends through an opening 13 in the end of the housing remote from the nose 6 and into an L-shaped release member 14 which extends back along the side of the housing. A helically coiled compression spring 15 is located in the housing and works against flanges 16 on the two legs to urge the legs to slide away from the nose 6.

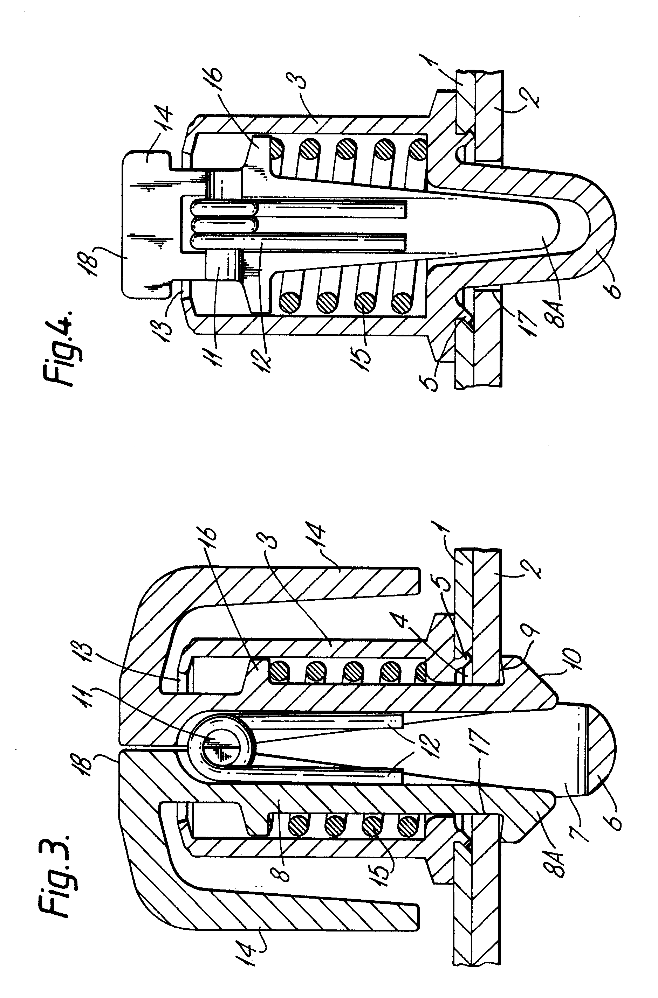

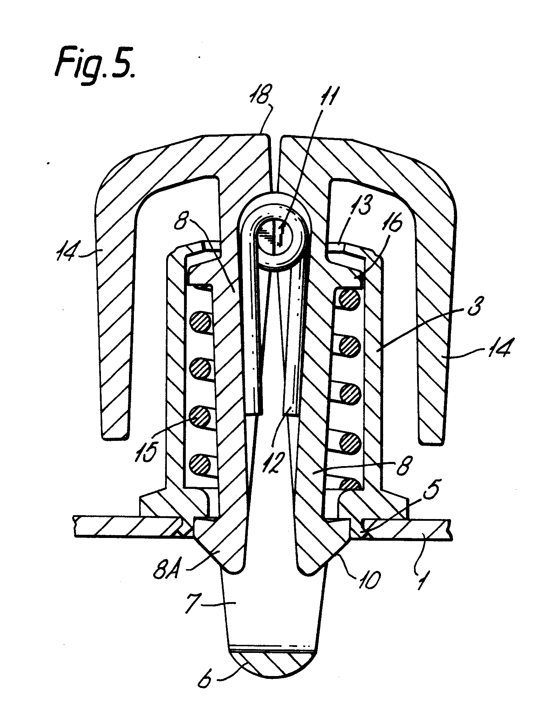

In use the fastener is prefitted to the panel 1 by swaging the flange 5. When the two panels are to be secured together, the nose 6 is offered up and through an aperture 17 in the second panel 2, with the legs in the fully withdrawn position under the action of the spring 15, as shown in Figure 5. Pressure is then applied to a surface 18 of the leg extensions, so that the legs are advanced in the housing against the action of the spring 15, whereupon the chamfers 10 ride over and through the inner edge of the aperture 17, the legs pivoting inwardly against the action of the spring 12, and then snapping out again when the shoulders 9 pass the remote surface of the panel 2. When the pressure is released, the spring 15 pulls the shoulders 9 back into firm engagement with the remote surface of the panel 2, as shown in Figure 3.

To release the fastener the members 14 are squeezed together so that the legs pivot towards one another against the action of the spring 12, whereupon the shoulders 9 are displaced to within the circumferences of the aperture 17 and of the nose 6, so that the legs may be withdrawn into the housing 3, and retained there by the action of the spring 15.

Although not illustrated, a positive lock for the fastener in the secured position may be provided by means of a ball or other locking member which is displaceable between the legs 8, by means of an externally accessible control part, between positions in which it holds the legs apart, and a position in which the legs are free to move towards one another for release of the fastener.

## Claims

1. A fastener for securing a first member (1) to a second member (2) at an aperture (17) through the second member, the fastener comprising a housing (3) which is arranged to be carried by the first member, and at least two legs (8) which are mounted in the housing and arranged so that ends (8A) of the legs may be spread apart, the leg ends projecting at one end of the housing and being arranged to be inserted through the aperture (17) in the second member and having shoulders (9) which engage the remote surface of the second member upon spreading apart of the leg ends to secure the two members together; and means (14) coupled to the legs for causing the leg ends to be displaced towards one another for release from the second member.

2. A fastener according to claim 1, wherein the legs (8) are resiliently urged apart to spread the leg ends (8A), the resilience being overcome when the leg ends (8A) are displaced towards one another for insertion through the aperture (17) in the second member (2).

3. A fastener according to claim 2, wherein the leg ends (8A) have leading chamfered portions (10) which ride over the edge of the aperture (17) in the second member (2) upon insertion of the leg ends through the aperture, the leg ends being arranged to snap outwardly as the shoulder (9) pass through the aperture.

4. A fastener according to any one of the preceding claims, wherein the legs (8) are each pivotable as a whole adjacent to the other end of the housing (3) and each leg is provided with an extension (14) projecting from the other end of the housing and arranged to receive a reaction for pivoting the legs (8) to the release position.

5. A fastener according to claim 4, wherein the legs (8) are loosely mounted in the housing (3) and are pivotable about an axis defined by mutually engaging parts (11) of the legs.

6. A fastener according to claim 4 or claim 5, wherein the leg extensions (14) are L-shaped and extend back along the sides of the housing (3), past the pivotal axis (11) of each arm (8), towards the one end of the housing, whereby the leg extensions (14) are arranged to be squeezed together for the release operation.

7. A fastener according to any one of the preceding claims, wherein the legs (8) are longitudinally slidably mounted in the housing (3) and are resiliently urged by a spring (15) to a retracted position in which the ends (8A) of the legs are withdrawn relatively to the housing.

8. A fastener according to any one of the preceding claims, wherein the housing also has a projecting nose (6) which is arranged to project through the aperture (17) in the second member - (2), and is slotted (7) so that the leg ends (8A) are transversely extendible and retractable with respect to the nose.

Fig.1.

Fig.2.

Fig.3.

Fig.4.

0 212 847

Fig.5.

| | | | |
|---|---|---|---|
| **DOCUMENTS CONSIDERED TO BE RELEVANT** | | | EP 86305513.3 |

| Category | Citation of document with indication, where appropriate, of relevant passages | Relevant to claim | CLASSIFICATION OF THE APPLICATION (Int. Cl.4) |
|---|---|---|---|
| A | DE - B2 - 2 441 577 (SOCIÉTÉ NATIO-NALE INDUSTRIELLE AEROSPATIALE S.A.) <br> * Fig. 1,3; claim 1 * <br> -- | 1 | F 16 B 5/06 |
| A | DE - A1 - 3 212 160 (ERNST, HANS-HELLMUT, DIPL.-ING.) <br> * Fig. 1-3,7,10; claim 1 * <br> -- | 1 | |
| P,A | EP - A1 - 0 169 463 (FEHRENSEN, HANS, DR.) <br> * Abstract; fig. 5 * <br> -- | 1 | |
| A | AU - B - 18 940/67 (WARREN FASTENER CORPORATION) <br> * Fig. 1,5,7; claim 1 * <br> ---- | 1 | **TECHNICAL FIELDS SEARCHED (Int. Cl.4)** <br><br> F 16 B |

The present search report has been drawn up for all claims

| Place of search | Date of completion of the search | Examiner |
|---|---|---|
| VIENNA | 08-10-1986 | HEIN |